Europäisches Patentamt

European Patent Office

Office européen des brevets

(19)

(11) **EP 0 779 427 B1**

(12) **EUROPÄISCHE PATENTSCHRIFT**

(45) Veröffentlichungstag und Bekanntmachung des Hinweises auf die Patenterteilung:
**11.10.2000 Patentblatt 2000/41**

(51) Int Cl.⁷: **F02D 41/36**, F02D 13/02

(21) Anmeldenummer: **96117490.1**

(22) Anmeldetag: **31.10.1996**

(54) **Verfahren zum Ab- und Zuschalten einzelner Zylinder einer Mehrzylinderbrennkraftmaschine**

Method and apparatus for individually activating and deactivating cylinders of a multi-cylinder combustion engine

Méthode pour activer et désactiver individuellement les cylindres d'un moteur à combustion à multi-cylindres

(84) Benannte Vertragsstaaten:
**DE ES FR GB IT**

(30) Priorität: **13.12.1995 DE 19546549**

(43) Veröffentlichungstag der Anmeldung:
**18.06.1997 Patentblatt 1997/25**

(73) Patentinhaber: **DaimlerChrysler AG**
**70567 Stuttgart (DE)**

(72) Erfinder:
• **Biesinger, Herwig**
**70825 Korntal-Münchingen (DE)**
• **Flebbe, Heiko**
**38524 Sassenburg (DE)**
• **Kalweit, Dieter**
**73614 Schorndorf (DE)**
• **Klein, Peter**
**70771 Leinfelden-Echterdingen (DE)**
• **Lautenschütz, Peter**
**73207 Plochingen (DE)**
• **Waltner, Anton**
**71384 Weinstadt (DE)**

(56) Entgegenhaltungen:
EP-A- 0 037 443        US-A- 4 230 076
US-A- 5 337 720        US-A- 5 408 966

EP 0 779 427 B1

**Beschreibung**

Die Erfindung betrifft ein Verfahren zum Ab- und Zuschalten von einzelnen Zylindern einer Mehrzylinderbrennkraftmaschine gemäß dem Oberbegriff des Hauptanspruchs.

Aus der US 5,337,720 ist ein Verfahren zur Zylinderabschaltung für eine Mehrzylinderbrennkraftmaschine bekannt, bei dem einzelne Zylinder durch Ansteuerung der Ventilsteuerung und der Kraftstoffeinspritzung ab- beziehungsweise zugeschaltet werden. Beim Abschalten eines Zylinders wird zuerst die zugehörige Kraftstoffeinspritzung deaktiviert und nach genau einem weiteren Ansaughub die zugehörigen Gaswechselventile deaktiviert und dadurch in geschlossenem Zustand gehalten. Beim Zuschalten eines Zylinders werden entsprechend zuerst die Gaswechselventile aktiviert und nach genau einem weiteren Ansaughub auch die Kraftstoffeinspritzung wieder aktiviert.

Bei solchen Zylinderabschaltungen kann es zu unerwünschten Effekten kommen. Beispielsweise kann es beim Abschalten eines Zylinders vorkommen, daß das zugehörige Einlaßventil vor dem Auslaßventil stillgesetzt wird. In diesem Fall wird beim vorhergehenden Arbeitstakt das Abgas aus dem Zylinder ausgeschoben, jedoch kein Frischgas mehr in den Brennraum geführt. Dadurch kommt es im Vergleich zu einer Abschaltung, bei der sich heißes Abgas im Brennraum befindet, zu einer unerwünschten Auskühlung. Ein anderer unerwünschter Ablauf ist der, daß zwar beim Abschalten zuerst das Auslaßventil abgeschaltet wird, daß aber beim anschließenden Zuschalten dieses Zylinders zuerst das Einlaßventil aktiviert wird. Somit ist der Brennraum während der Abschaltphase zwar mit heißem Abgas gefüllt. Beim Zuschalten wird aber dann das Frischgas mit diesem im Brennraum verbliebenen Abgas vermischt, was eine schlechtere Verbrennung zur Folge hat.

Aus dem Dokument US-A-5 408 966 ist ein Verfahren bekannt, wonach die Abschaltung des Zylinders nach einem Ansaugtakt und die Zuschaltung des Zylinders vor dem Auslasstakt durchgeführt wird.

Es ist die Aufgabe der Erfindung, ein Verfahren zum Ab- und Zuschalten einzelner Zylinder derart zu verbessern, daß eine Auskühlung der Brennräume der abgeschalteten Zylinder und eine Beeinträchtigung der Abgaszusammensetzung durch den Umschaltvorgang verhindert werden kann.

Die Aufgabe wird erfindungsgemäß durch die Merkmale des kennzeichnenden Teiles des Hauptanspruches gelöst.

Dadurch, daß beim Umschalten eines Zylinders die Aktivierung beziehungsweise Deaktivierung der Ein- und Auslaßventile derart zeitlich gesteuert erfolgt, daß die Abschaltung des besagten Zylinders nach einem Ansaugtakt und die Zuschaltung des besagten Zylinders vor einem Ansaugtakt erfolgt, wird sichergestellt, daß sich im abgeschalteten Zylinder stets heißes Abgas befindet und somit das Auskühlen des Brennraumes weitgehend verhindert wird. Beim Zuschalten des Zylinders wird zuerst dieses Abgas aus dem Brennraum ausgeschoben und erst anschließend neues Luft/Kraftstoffgemisch angesaugt. Dadurch wird trotz Zylinderabschaltung gewährleistet, daß in dem Zylinder entweder eine definierte oder aber gar keine Verbrennung stattfindet.

Weitere Vorteile und Ausgestaltungen gehen aus den Unteransprüchen und der Beschreibung hervor. Die Erfindung ist nachstehend anhand einer Zeichnung näher beschrieben, wobei

Fig. 1 eine Mehrzylinderbrennkraftmaschine mit einer Vorrichtung zur Zylinderabschaltung teilweise im Schnitt,

Fig. 2 die Mehrzylinderbrennkraftmaschine aus Fig. 1 im Querschnitt,

Fig. 3 eine Prinzipdarstellung einer Abschalteinrichtung für vier Gaswechselventile,

Fig. 4 schematisch die Ventilerhebungskurven der Gaswechselventile eines Zylinders vor während und nach einer Zylinderabschaltung,

Fig. 5 schematisch das Abschalt-Timing anhand der Ventilsteuerzeiten für einen Achtzylinder-V-Motor,

Fig. 6 ein Ausführungsbeispiel für Zu- und Abschaltkennlinien für die Zylinderabschaltung,

Fig. 7 schematisch die Korrektur für den Drosselklappenwinkel anhand einer Zylinderumschaltung, und

Fig. 8 schematisch das Abschalt-Timing anhand der Ventilsteuerzeiten für einen Sechszylinder-Motor zeigt.

Für Mehrzylinderbrennkraftmaschinen sind Verfahren und Vorrichtungen bekannt, mit deren Hilfe beispielsweise aus Gründen der Kraftstoffeinsparung in bestimmten Betriebsbereichen ein oder mehrere Zylinder abgeschaltet werden können. Hierzu werden für die ausgewählten Zylinder vorzugsweise die Gaswechselventile geschlossen gehalten und die Kraftstoffeinspritzung unterbrochen. Gemäß den weiter unten beschriebenen Ausführungsbeispielen erfolgt die Zylinderabschaltung in Abhängigkeit von Last und Drehzahl, wobei in der Abschaltphase nur noch die Hälfte der Zylinder betrieben werden. In anderen Worten wird eine Sechszylinder-Brennkraftmaschine nur noch mit drei Zylindern beziehungsweise eine Achtzylinder-Brennkraftmaschine nur noch mit vier Zylindern betrieben. Die Erfindung kann jedoch in entsprechender Weise auch auf die Abschaltung einzelner Zylinder angewendet werden.

Vorrichtungen zum Aktivieren und Deaktivieren einzelner Gaswechselventile sind aus dem Stand der Technik bekannt und werden daher im folgenden nur kurz beschrieben. Beispielsweise ist aus einer früheren Patentanmeldung der Anmelderin (DE 42 21 135 C1), auf die hiermit ausdrücklich Bezug genommen wird, eine hydraulische Vorrichtung zur Koppelung zweier Ventilbetätigungshebel bekannt. Zwar wird die dort beschriebene Vorrichtung für die Kopplung zweier durch unterschiedliche Nocken einer Nockenwelle betätigte Ventilbetätigungshebel eingesetzt. Eine solche Koppeleinrichtung kann aber gemäß den folgenden Ausführungen auch für die Aktivierung beziehungsweise Deaktivierung eines einzigen Ventilbetätigungshebels verwendet werden.

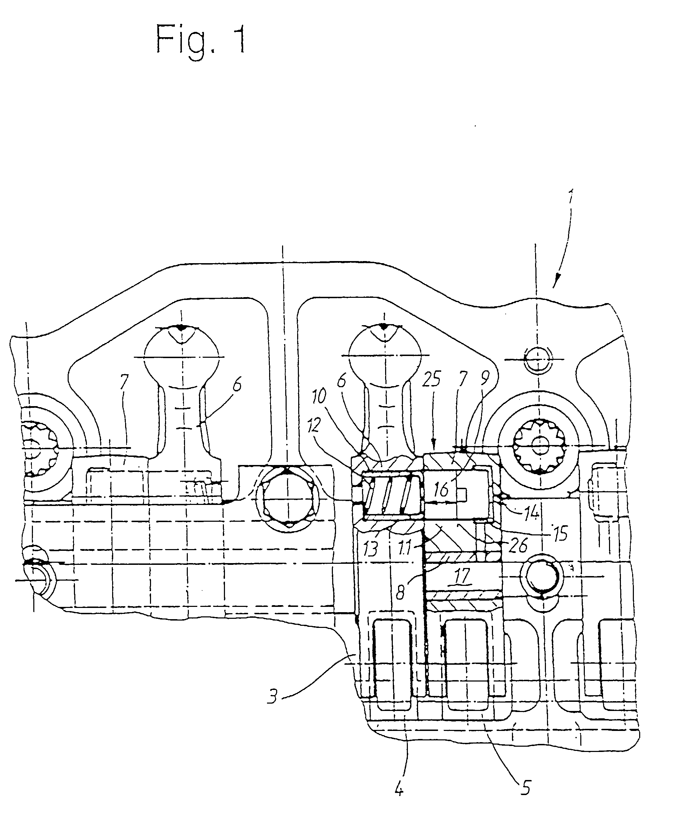

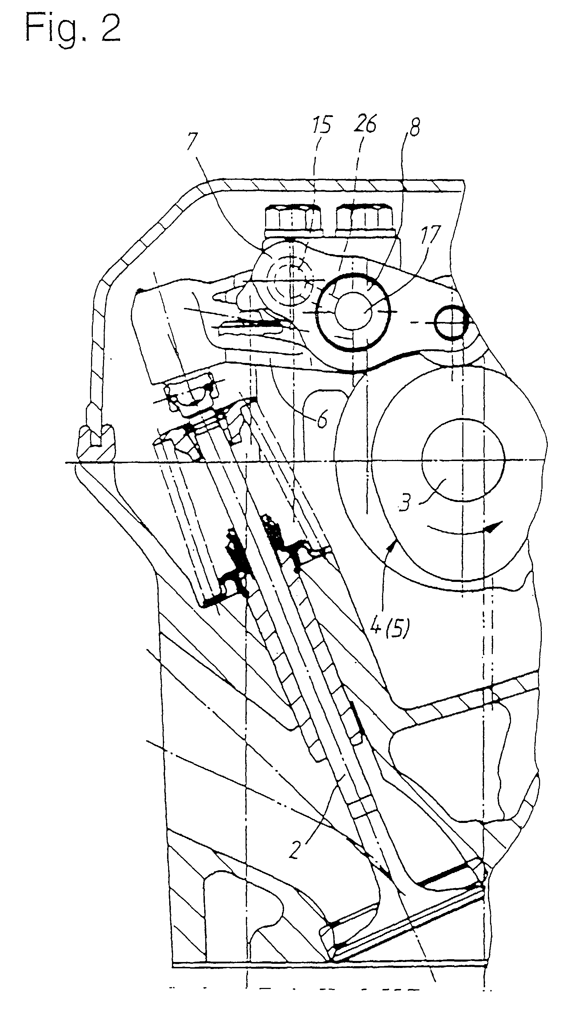

Im Zylinderkopf 1 einer nicht weiter dargestellten MehrzylinderBrennkraftmaschine gemäß den Fig. 1-3 ist zumindest ein Einlaßbeziehungsweise Auslaßventil 2 je Zylinder vorgesehen, welches von einer Nockenwelle 3 angetrieben wird. Die Vorrichtung wird im folgenden zwar anhand eines Einlaßventils 2 beschrieben, kann aber entsprechend auch für Auslaßventile verwendet werden. Jedem Einlaßventil 2 sind zwei Nocken 4, 5 auf der Nockenwelle 3 zugeordnet, wobei der eine Nocken 4 einen als Kipphebel ausgebildeten, das Einlaßventil unmittelbar antreibenden Betätigungshebel 6 abstützt, während der andere Nocken 5 einen mit dem Betätigungshebel 6 koppelbaren Koppelhebel 7 betätigt. Der Betätigungshebel 6 und der Koppelhebel 7 sind auf einer gemeinsamen Hebelachse 8 drehbar gelagert. Die beiden Nocken 4, 5 haben Grundkreise gleichen Durchmessers, wobei lediglich der dem Koppelhebel 7 zugeordnete Nocken 5 eine Nockenerhebung aufweist. Im ungekoppelten Zustand ist der Grundkreis des Nockens 4 wirksam, so daß das Einlaßventil 2 im geschlossenen Zustand verbleibt. Im gekoppelten Zustand der beiden Hebel 6, 7 ist die Nockenerhebung des Nockens 5 wirksam, wodurch das Einlaßventil 2 betätigt wird. Die Ventilerhebungskurve wird somit ausschließlich durch den Nocken 5 bestimmt.

Die Kopplung von Betätigungshebel 6 und Koppelhebel 7 erfolgt durch eine Koppelvorrichtung 25, die als Koppelelemente einen Bolzen 9, eine Führungstasse 13, ein Zylinderloch 10 und eine Bohrung 11 umfaßt. Der Bolzen 9 ist in einer zur Hebelachse 8 parallelen Bohrung 11 im Koppelhebel 7 längsverschiebbar geführt und von einer Feder 12 über eine Führungstasse 13 belastet, die im Zylinderloch 10 im Betätigungshebel 13 längsverschiebbar geführt ist. Die Hebel 6, 7 und die Nocken 4, 5 sind derart angeordnet, daß das Zylinderloch 10 bei Anlage der beiden Hebel 6, 7 am jeweiligen Grundkreis der Nocken 4, 5 mit der Bohrung 11 fluchtet. Im gekoppelten Zustand drückt die Feder 12 die Führungstasse 13 und den Bolzen 9 gegen einen Anschlag 14 auf der dem Betätigungshebel 6 abgewandten Seite. In dieser Stellung ragt die Führungstasse 13 mit einer Teillänge 16 in die Bohrung 11, wodurch die beiden Hebel 6 und 7 drehfest miteinander koppelt sind. Zur Entkopplung der beiden Hebel 6, 7 wird in einem Druckraum 15 auf der dem Betätigungshebel 6 abgewandten Seite des Bolzens 9 ein Öldruck erzeugt, der diesen gegen die Kraft der Feder 12 bis zum Anschlag der Führungstasse 13 an der Stirnwand des Zylinderlochs 10 in dieses schiebt, so daß er mit der Berührungsebene zwischen den beiden Hebeln 6, 7 abschließt und nicht in die Bohrung 11 hineinragt.

Die Führungstasse 13 kann nur während des Wirksamseins des Grundkreises des Nockens 5 in die Bohrung 11 eingeschoben werden, da diese und das Zylinderloch 10 während des Wirksamseins der Nockenerhebung des Nockens 5 nicht miteinander fluchten. Da während dieses Wirksamseins der Nockenerhebung erhebliche Kräfte zwischen den Hebeln 6, 7 übertragen werden, ist auch dann, wenn der Kopplungs- oder Entkopplungsvorgang durch Druckaufbau oder Druckentlastung im Druckraum 15 bereits eingeleitet ist, ein Verschieben der Führungstasse 13 innerhalb der Bohrung 11 während des Wirksamseins der Nockenerhebung ausgeschlossen. Um eine Beschädigung der Führungstasse 13 zu vermeiden sollte sie sich daher beim Wirksamwerden der Nockenerhebung bereits in ausreichendem Maße in der Bohrung 11 befinden.

Der Druckauf- und -abbau im Druckraum 15 erfolgt über eine Längsbohrung 17 in der Hebelachse 8, die über eine Querleitung 26 im Koppelhebel 7 mit dem Druckraum 15 verbunden ist. Die Längsbohrung 17 wird von einer Ölpumpe 18, die die übliche Schmierölpumpe der Brennkraftmaschine sein kann, über eine Leitung 19 mit Öl versorgt. In dieser Leitung 19 ist ein 3/2-Wege-Ventil 20 angeordnet, das die Längsbohrung 17 entweder mit der Ölpumpe 18 oder einem Vorratsbehälter 21 verbindet. Das 3/2-Wege-Ventil 20 wird über ein elektrisches Signal von einem Steuergerät 22 geschaltet, welches als Eingangssignale 23 insbesondere die Motordrehzahl n, ein Stellungssignal der Kurbel- oder Nockenwelle $N_{seg}$, sowie die Öltemperatur $T_{öl}$ über einen Temperaturfühler 24 in der Leitung 19 erhält. Mit Hilfe des Steuergerätes 22 kann das 3/2-Wege-Ventil 20 in ganz bestimmten Nockenwellenstellungen angesteuert werden. Das 3/2-Wege-Ventil 20 ist schnellschaltend und besitzt eine möglichst geringe Schaltzeitinvarianz. Zusätzlich wird durch möglichst große Leitungsquerschnitte und möglichst geringer Leitungslängen die Zeitverzögerung zwischen dem Schalten des 3/2-Wege-Ventils 20 und des Bolzens 9 verringert.

Die oben beschriebene Vorrichtung zur Zylinderabschaltung ist nur ein mögliches Ausführungsbeispiel. Selbstverständlich können auch andere Vorrichtungen verwendet werden. Entscheidend ist jedoch, daß die Ansteuerung der Umschaltung schnell und ohne zeitliche Schwankungen erfolgt. Nur in diesem Fall kann die Umschaltung anhand der momentanen Motordrehzahl n an einem möglichst genau vorgegebenen Nockenwellenwinkel vorgenommen werden.

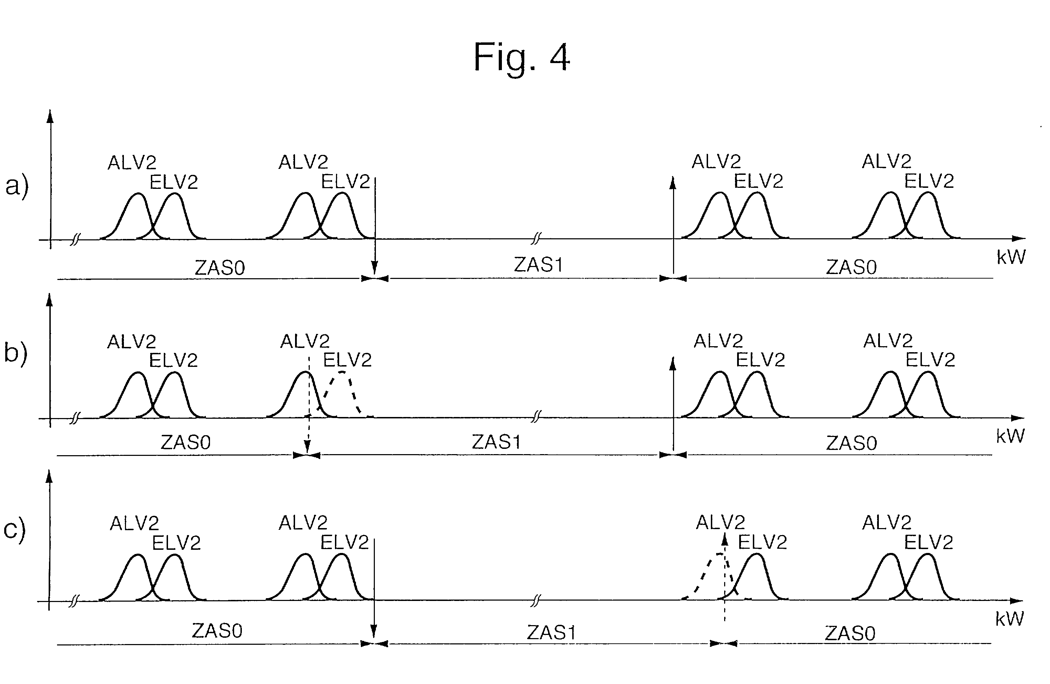

In Fig. 4 sind die Ventilerhebungskurven der Ein- und Auslaßventile 2 beispielhaft anhand des Zylinders Z2 vor, während und nach einer Zylinderabschaltung schematisch dargestellt, wobei nach rechts der Kurbelwellenwinkel KW und nach oben die Ventilerhebungskurve aufgezeichnet ist. Während eines Arbeitstaktes der Brennkraftmaschine öffnet das Einlaßventil ELV2 und das Auslaßventil ALV2 ohne Zylinderabschaltung jeweils einmal. Die Kurbelwellen-Bereiche, in denen die Zylinderabschaltung nicht aktiviert ist, sind mit ZAS0, der Bereich mit Zylinderabschaltung mit ZAS1 bezeichnet. Der nach unten gerichtete Pfeil kennzeichnet den Zeitpunkt der Zylinderabschaltung, der nach oben gerichtete Pfeil die Zylinderzuschaltung. Zur Verdeutlichung, daß zwischen Zylinderab- und -zuschaltung eine beliebige Anzahl von Arbeitstakten liegen kann, ist die Winkelachse im Bereich der Zylinderabschaltung ZAS1 unterbrochen.

Fig. 4a zeigt ein Ausführungsbeispiel, bei dem die Zylinderab beziehungsweise -zuschaltung erfindungsgemäß zu einem vorgegebenen Zeitpunkt beziehungsweise bei einem vorgegebenen Kurbelwinkel erfolgt. Und zwar erfolgt die Zylinderabschaltung erfindungsgemäß immer nach einem Einlaßtakt ELV2. Dadurch wird erreicht, daß sich im abgeschalteten Zylinder Z2 während der Abschaltphase ZAS1 heißes Abgas befindet und eine unerwünschte Auskühlung des Brennraumes vermieden wird. Unmittelbar vor der Abschaltung wird nämlich noch zündfähiges Kraftstoff/Luftgemisch in den Zylinder Z2 geleitet und anschließend dort korrekt verbrannt. Lediglich der darauffolgende Auslaßtakt ALV2 wird unterbunden. Nach einer beliebigen Anzahl von ausgesetzten Arbeitstakten wird anschließend die Zylinderabschaltung vor dem Beginn eines Auslaßtaktes ALV2 aufgehoben. Dadurch wird das Abgas in die Abgasleitung ausgeschoben und anschließend wieder zündfähiges Frischgas angesaugt.

Zur Aufrechterhaltung einer korrekten Verbrennung ist es also wichtig, daß die Umschaltvorgänge zu vorgegebenen Zeitpunkten beziehungsweise Kurbelwinkeln erfolgen. Bei einer Zylinderumschaltung ohne entsprechendes Timing kommt es aufgrund der Statistik bei einem bestimmten Anteil der Umschaltvorgänge zu einem nicht korrekten Verbrennungsablauf. Hierbei sind zwei Konstellationen, wie sie in den Fig. 4b und 4c dargestellt sind denkbar. Zum einen kann der Abschaltvorgang zu einem Zeitpunkt erfolgen, an dem das Auslaßventil ALV2 bereits geöffnet hat und somit das verbrannte Abgas bereits ausgeschoben wird, das Einlaßventil ELV2 aber noch geschlossen ist. Ein solcher Zeitpunkt ist in Fig. 4b mit einem gestrichelten, nach unten gerichteten Pfeil markiert. In diesem Fall befindet sich während der Abschaltphase ZAS1 kein heißes Abgas im Brennraum, so daß eine verstärkte Auskühlung des Brennraumes erfolgt und außerdem ein hoher Unterdruck im Brennraum herrscht.

Die zweite unerwünschte Konstellation kann bei der Zylinderzuschaltung auftreten und ist in Fig. 4c entsprechend mit einem gestrichelten, nach oben gerichteten Pfeil markiert. Hierbei erfolgt die Zylinderzuschaltung zu einem Zeitpunkt unmittelbar vor einem Einlaßtakt, wobei der vorhergehende Auslaßtakt aber noch unterdrückt wurde. Ist nun die Zylinderabschaltung korrekt nach einem Einlaßtakt erfolgt, so befindet sich zum Zeitpunkt des ersten Ansaugtaktes noch verbranntes Abgas im Brennraum. Beim ersten Ansaugtakt vermischt sich das Frischgas im Brennraum mit dem Abgas, wodurch ein schlecht oder zündunfähiges Gasgemisch entstehen kann. Die Folge ist eine Verschlechterung des Abgasverhaltens der Brennkraftmaschine. Um solche unerwünschten Konstellationen sicher zu verhindern ist ein entsprechendes Timing des Ab- und Zuschaltvorganges unerläßlich.

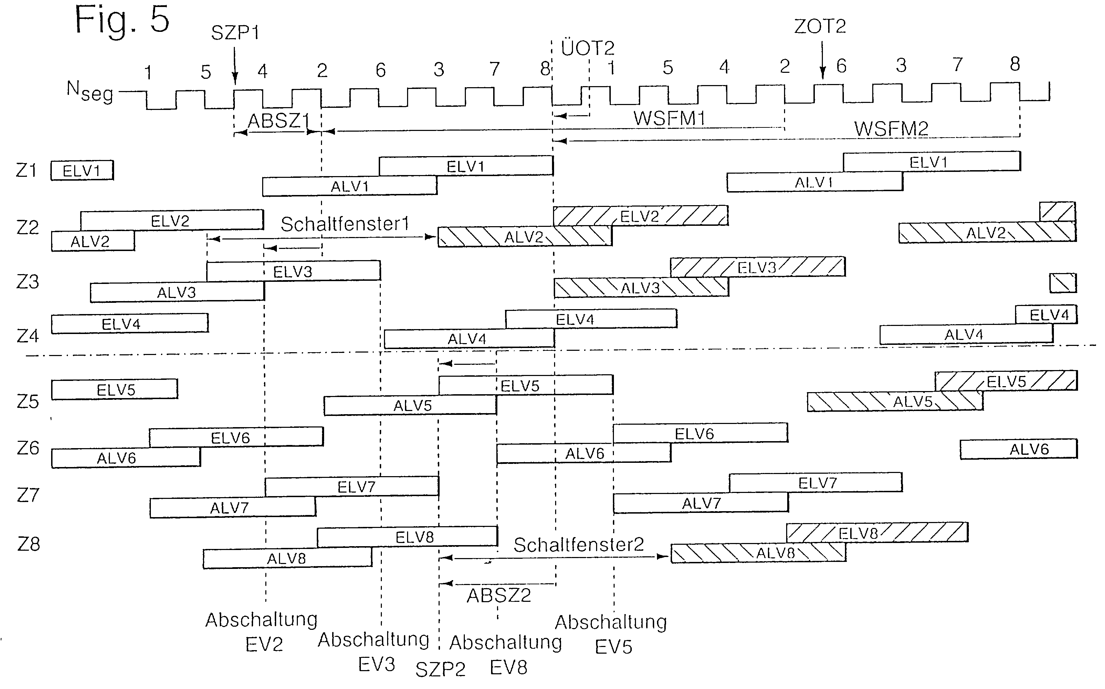

Im folgenden wird nun anhand von Fig. 5, in der schematisch die Ventilsteuerzeiten für einen Achtzylinder-V-Motor dargestellt sind, ein erfindungsgemäße Verfahren anhand eines Abschaltvorganges ausführlich beschrieben. Die Zylinder sind auf zwei Bänke aufgeteilt, wobei die Zylinder Z1 - Z4, die in Fig. 4 oberhalb der gestrichelten Linie dargestellt sind, in Bank1 und die Zylinder Z5- Z8, die unterhalb der gestrichelten Linie dargestellt sind, in Bank2 angeordnet sind. Nach rechts ist die Zeitachse beziehungsweise der Kurbelwellenwinkel KW aufgetragen, wobei die in der ersten Zeile zusätzlich aufgetragenen Kurbelwellensegmente $N_{seg}$ mit einem beispielsweise direkt an der Kurbelwelle 3 angeordneten Segmentgeber erfaßt werden. In der ersten Zeile ist zum besseren Verständnis zusätzlich die Zündfolge der einzelnen Zylinder Z1- Z8 aufgetragen. In den darunterliegenden Zeilen sind die Ventilsteuerzeiten ELV1-ELV8, ALV1-ALV8 der einzelnen Einlaß- und Auslaßventile 2 gezeigt, wobei zum besseren Verständnis auch die Ventilsteuerzeiten der abgeschalteten Ventile 2, allerdings mit einer Schraffur versehen, dargestellt sind.

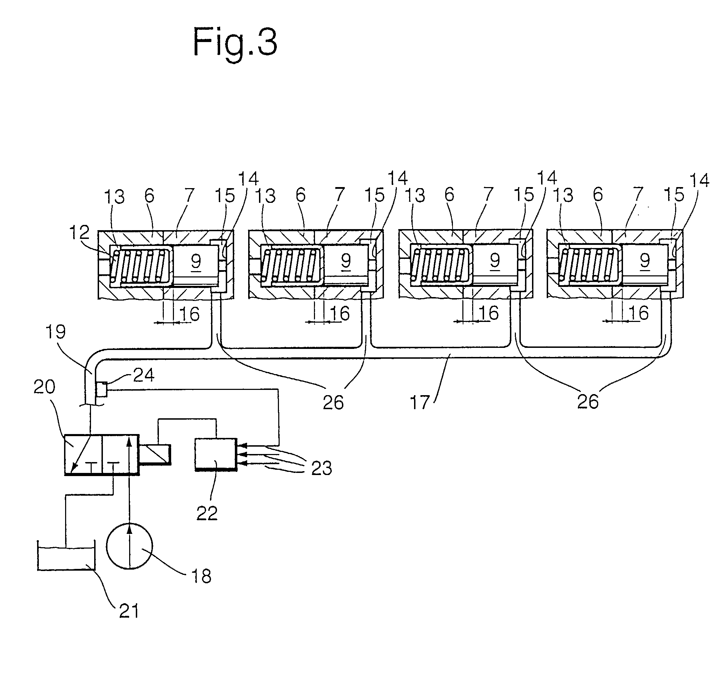

Gemäß diesem Ausführungsbeispiel werden bei der Zylinderabschaltung die Hälfte der Zylinder Z1-Z8 abgeschaltet, und zwar in Bank1 die Zylinder Z2 und Z3 und in Bank2 die Zylinder Z5 und Z8. Hierfür sind an den abzuschaltenden Zylinder Z2, Z3, Z5, Z8 entsprechende Abschalteinrichtungen vorgesehen. An den anderen Zylindern Z1, Z4, Z6 und Z7 sind keine Abschalteinrichtungen angeordnet. Obwohl in den Ausführungsbeispielen nur Brennkraftmaschinen mit jeweils einem Ein- beziehungsweise Auslaßventil 2 pro Zylinder gezeigt sind, bezieht sich das erfindungsgemäße Verfahren auch auf Brennkraftmaschinen mit mehreren Einlaß- und/oder Auslaßventilen pro Zylinder. Hierbei müssen lediglich alle Ventile der abzuschaltenden Zylinder mit einer entsprechenden Abschalteinrichtung ausgestattet werden. Gemäß dem Ausführungsbeispiel werden alle zu schaltenden Ventile ALV2, ELV2, ALV3, ELV3 von Bank1 über eine in Fig. 3 dargestellte und insgesamt mit 27a bezeichnete erste Abschaltvorrichtung betätigt, während für die zu schaltenden Ventile ALV8, ELV8, ALV5, ELV5 in Bank2 eine zweite Abschalteinrichtung 27b vorgesehen ist.

Die Zylinderabschaltung soll gemäß Fig. 5 am zweiten Zylinder Z2 in Bank1 beginnen. Anschließend werden die weiteren Zylinder in der Reihenfolge Z3, Z8 und Z5 deaktiviert, wobei bei jedem Zylinder Z2, Z3, Z8, Z5 zuerst das Auslaßventil abgeschaltet wird. Um zu gewährleisten, daß die Abschaltung beim Auslaßventil 2 von Zylinder Z2 beginnt muß die Abschalteinrichtung 27a irgendwo in dem mit Schaltfenster1 bezeichneten Kurbelwinkelbereich geschaltet werden. Das Schaltfenster1 erstreckt sich über den Kurbelwellenbereich zwischen dem Einlaßbeginn des Ventils ELV3 und dem Auslaßbeginn des Ventils ALV2. Beim Start des Schaltvorgangs wird in der Abschalteinrichtung 27a die Leitung 19 über das 3/2-Wege-Ventil 20 mit der Ölpumpe 18 verbunden. Dadurch steigt in den Druckräumen 15 aller Koppelvorrichtungen 25 der Ventile ALV2, ELV2 des Zylinders Z2 und ALV3, ELV3 des Zylinders Z3 gleichzeitig der Öldruck an. In die Koppelstellung können jedoch nur diejenigen Ventile 2 gelangen, deren Koppelhebel 7 zum aktuellen Zeitpunkt am Grundkreis des Nockens 5 anliegen, da sich der Bolzen 9 nur dann aus der Bohrung 11 bewegen kann. Solange das entsprechende Ventil durch den zugehörigen Nocken 5 in Öffnungsstellung gehalten wird ist die Führungstasse 13 nicht kräftefrei und eine Entkopplung kann somit nicht stattfinden.

Würde nun der Umschaltvorgang bereits vor dem vorgegebenen Bereich gestartet, so würde zuerst das Einlaßventil ELV3 am Zylinder Z3 abgeschaltet. In diesem Fall befände sich das Ventil ELV3 nämlich noch in der Schließstellung und somit könnte bei einer Aktivierung der Abschalteinrichtung 27a der Entkoppelvorgang sofort starten. Würde der Entkoppelvorgang auf der anderen Seite erst nach dem Verlassen des Schaltfenster1 gestartet, so wäre das Auslaßventil ALV2 bereits zumindest teilweise geöffnet und der Entkoppelvorgang könnte nicht mehr erfolgreich durchgeführt werden. Das Einlaßventil ELV2 wäre zu diesem Zustand aber noch in Schließstellung und könnte somit erfolgreich deaktiviert werden. Somit würde das Auslaßventil ALV2 noch einen vollständigen Auslaßtakt durchlaufen, während der folgende Einlaßtakt ELV2 bereits unterdrückt würde. Dies hätte aber zur Folge, daß die Umschaltung des Zylinders Z2 nicht nach einem Einlaßtakt, sondern nach einem Auslaßtakt erfolgen würde.

Für die Zylinderabschaltung hat diese Wahl des Schaltfensters1 folgenden Effekt: In Zylinder Z2 ist zu Beginn des Schaltfensters1 der vorhergehende Auslaßtakt ALV2 auf jeden Fall beendet und bei einer Aktivierung der Abschalteinrichtung 27a kann der Entkoppelvorgang sofort starten. Der Einlaßtakt ELV2 ist entweder bereits abgeschlossen oder aber die Koppelvorrichtung 25 am Einlaßventil 2 wird trotz der Aktivierung der Abschaltvorrichtung 27a durch den Kraftschluß bis zur Vollendung des Einlaßtaktes ELV2 in der Koppelstellung gehalten. Somit ist für Zylinder Z2 gewährleistet, daß die Zylinderabschaltung auf jeden Fall nach einem Einlaßtakt erfolgt. In Zylinder Z3 hat sowohl der Auslaßtakt ALV3 als auch der Einlaßtakt ELV3 zu Beginn des Schaltfensters 1 bereits begonnen, so daß beide Arbeitstakte aufgrund des Kraftschlußes in den Koppelvorrichtungen 25 vollständig ausgeführt werden, so daß auch das Arbeitsspiel der Gaswechselventile 2 im Zylinder Z3 vor der Zylinderabschaltung mit einem Einlaßtakt endet.

Die Öffnungszeiten der Ventile an den Zylindern Z1 und Z4 können bei dieser Betrachtung unberücksichtigt bleiben, da hier keine Koppelvorrichtungen 25 vorgesehen sind. Entsprechendes gilt für die Zylinder Z6 und Z7 in Bank2. Hier müssen lediglich die Öffnungszeiten der Ventile an den Zylindern Z5 und Z8 berücksichtigt werden, da nur diese Ventile mit einer Koppelvorrichtung 25 versehen sind. Die Betrachtungen hinsichtlich der Wahl des zugehörigen Schaltfensters2 entsprechen dem oben gesagten. Hierbei beginnt das Schaltfenster2 nach dem Einlaßbeginn am Einlaßventil ELV5 und endet vor dem Auslaßbeginn am Auslaßventil ALV8.

Für den Zeitpunkt, an dem die Abschaltung erfolgen soll, wird aus Sicherheitsgründen die Mitte der Schaltfenster 1, beziehungsweise 2 gewählt. Dadurch wird gewährleistet, daß zum einen das Ventil ELV3 beziehungsweise ELV5 bereits weit geöffnet ist und somit mit Sicherheit nicht entkoppelt werden kann und daß zum anderen der Entkoppelvorgang für das Ventil ALV2 beziehungsweise ALV8 vor dem Auslaßbeginn mit Sicherheit beendet ist. Bei der Ansteuerung des 3/2-Wege-Ventils 20 muß jedoch zusätzlich berücksichtigt werden, daß das System bedingt durch seine mechanische und hydraulische Trägheit eine bestimmte Schaltzeit, das heißt den Zeitraum zwischen der Ansteuerung des 3/2-Wege-Ventils 20 und dem potentiellen Schaltvorgang an den Koppelvorrichtungen 25, benötigt. Diese Schaltzeiten AbsZ1, AbsZ2 addieren sich aus einem von der Drehzahl- und der Öltemperatur abhängigen Offset AbsZOs und einer richtungsabhängigen Ventilschaltzeit AbsZab, AbsZzu. Richtungsabhängig bedeutet in diesem Zusammenhang, daß die sich die Schaltzeiten für die Zylinderabschaltung AbsZab und die Zylinderzuschaltung AbsZzu unterscheiden. Diese Schaltzeiten können beispielsweise aus einem entsprechenden Kennfeld ausgelesen werden.

Als Referenzmarke für das Schalttiming wird jeweils der Beginn des letzten Nockenwellensegmentes $N_{seg}$ vor dem Zünd-OT des ersten schaltenden Zylinders gewählt. Für Bank1 ist beispielsweise der Zünd-OT (ZOT2) für Zylinder Z2 eingetragen, wobei die Referenzmarke in diesem Fall dem Ende des mit 2 bezeichneten Nockenwellensegments $N_{seg}$ entspricht. Ausgehend von dieser Referenzmarke wird der Winkelbereich WSFM1, WSFM2 bis zur Mitte des entsprechenden Schaltfensters1, 2 bestimmt. Liegt nun ein Signal der Motorsteuerung zur Zylinderabschaltung vor, so wird zuerst zum aktuellen Kurbelwellenwinkel die entsprechende Schaltzeit AbsZ1, AbsZ2 und anschließend der zugehörige Winkelbereich WSFM1, WSFM2 addiert. Ausgehend von diesem Zeitpunkt wird dann die nächstmögliche Referenzmarke ermittelt und daraus rückwärts durch Subtraktion des Winkelbereichs WSFM1, WSFM2 und der Schaltzeit AbsZ1, AbsZ2 der gewünschte Schaltzeitpunkt SZP1, SZP2 berechnet. Zu diesem Zeitpunkt wird dann durch Umschalten des 3/2-Wege-Ventils 20 die Zylinderabschaltung aktiviert.

Die Lage der Schaltfenster bezogen auf den Überschneidungs-OT von Zylinder Z2 für Bank1 beziehungsweise Zylinder Z8 für Bank2 wird ermittelt nach der Formel:

$$\text{Schaltfenster-Mitte} = -1/2(-Ab + EB) - 360° \text{ KW}$$

mit:

EB = Einlaßbeginn (Betrag) in °KW vor OT bei 0mm Ventilhub,

AB = Auslaßbeginn (Betrag) in °KW vor UT bei 0mm Ventilhub,

wobei in der Formel ein positives Vorzeichen einem Kurbelwinkel nach und ein negatives Vorzeichen einem Kurbelwinkel vor dem jeweiligen Überschneidungs-OT entspricht.

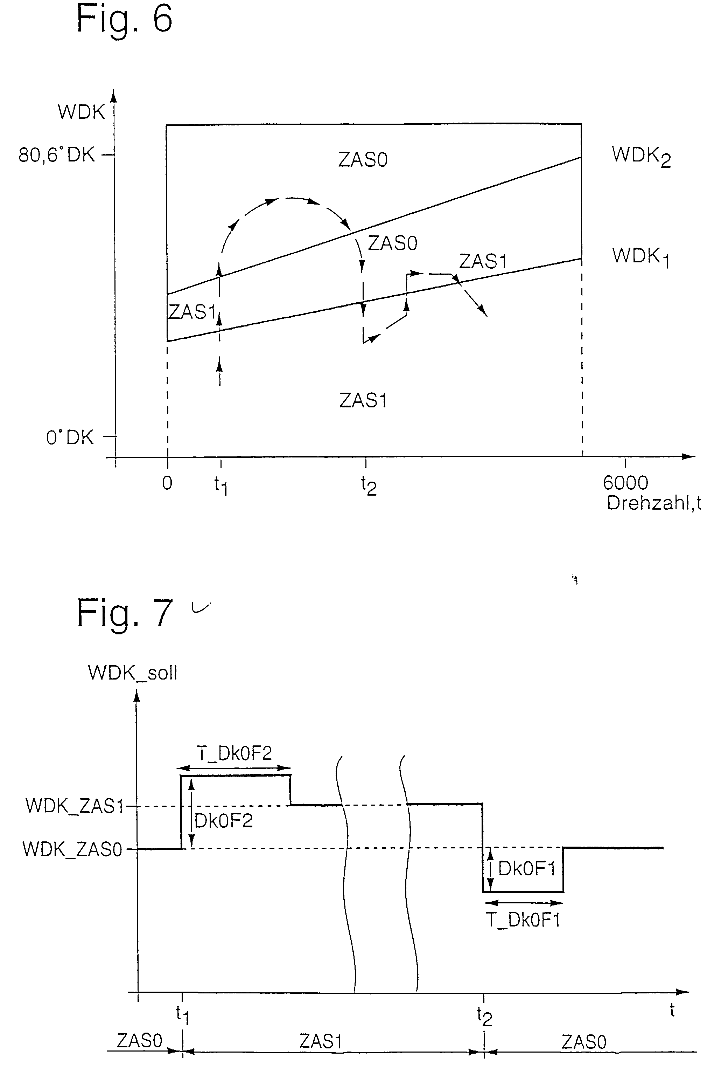

Eine Zylinderabschaltung kann prinzipiell jedoch nur dann erfolgen, wenn verschiedene vorgegebene Einschaltbedingungen erfüllt sind. Hierzu werden verschiedene Motorparameter, beispielsweise Motor-/ Öltemperatur, Öldruck, Drehzahl, Zeitraum seit dem Motorstart beziehungsweise seit der letzten Zylinderabschaltung, eingelegter Gang und Umgebungsdruck mit vorgegebenen Schwellwerten beziehungsweise zulässigen Wertebereichen verglichen. Eine Zylinderabschaltung wird nur dann zugelassen, wenn einige oder alle diese Einschaltbedingungen erfüllt sind. Insbesondere die Drehzahlbedingungen können zur Unterdrückung von ungewollten Schaltvorgängen mit einer Hysteresedrehzahl, wie in Fig. 6 gezeigt, versehen werden. Hierzu werden zwei Kennlinien WDK1, WDK2 für den Drosselklappenwinkel WDK in Abhängigkeit von der Drehzahl n vorgegeben. Im Bereich ZAS1 unterhalb der Kennlinie WDK1 kann die Zylinderabschaltung immer und im Bereich ZAS0 oberhalb der Kennlinie WDK2 nie aktiviert werden. Die Umschaltung von ZAS0 auf ZAS1 erfolgt jedoch erst bei Unterschreiten der Kennlinie WDK1. Die Umschaltung von ZAS1 auf ZAS0 entsprechend erst bei Überschreiten der Kennlinie WDK2. Im Bereich zwischen den beiden Kennlinien WDK1, WDK2 erfolgt also keine Umschaltung. Überschreitet der Drosselklappenwinkel WDK, wie in der rechten Hälfte von Fig. 6 gezeigt, die Kennlinie WDK1 nur geringfügig und auch nur für kurze Zeit, so wird eine Deaktivierung der Zylinderabschaltung unterbunden. Überschreitet der Drosselklappenwinkel WDK bei einer spontanen Lastanforderung die Kennlinie WDK2, so wird die Zylinderabschaltung deaktiviert.

Im Betrieb der Brennkraftmaschine wird die Zylinderabschaltung also nur dann aktiviert, wenn zum einen die Einschaltbedingungen erfüllt sind und wenn zum anderen die Kennlinie WDK1 unterschritten wird. Zu diesem Zeitpunkt wird dann die Ermittlung der Schaltzeit SZP1, SZP2 ausgelöst. Beim Erreichen dieses Schaltzeitpunktes SZP1, SZP2 wird schließlich der Abschaltvorgang durch eine Ansteuerung des 3/2-Wege-Ventils 20 gestartet. Die Kraftstoffeinspritzung wird derart gesteuert, daß vor jedem korrekten Ansaughub eine Einspritzung in den betreffenden Zylinder erfolgt, bei deaktiviertem Einlaßventil aber eine Einspritzung auf jeden Fall verhindert wird. Das heißt, es gibt weder eine Kraftstoffeinspritzung in einen abgeschalteten Zylinder noch gibt es Arbeitstakte, in denen ausschließlich Luft in den Brennraum geführt wird. Um dies sicherzustellen werden entsprechende Steuersignale von der Zylinderabschaltung an das Steuergerät für die Kraftstoffeinspritzung übergeben.

Um bei der Zylinderabschaltung neben der Abgasqualität auch den Fahrkomfort und Kraftstoffverbrauch zu berücksichtigen, können zusätzliche Korrekturen bezüglich Drosselklappenstellung, Kraftstoffzumessung und Zündzeitpunkt vorgesehen werden. Hinsichtlich der Drosselklappenstellung soll durch die Korrektur die durch das Abschalten von Zylindern bedingte Drehmomentänderung ausgeglichen werden. Würde nämlich bei einem konstanten Beschleunigungsvorgang, das heißt konstanter Fahrpedalstellung, die Zylinderabschaltung einsetzen, so würde sich ohne eine Korrektur des Drosselklappenwinkels die Ausgangsleistung der Brennkraftmaschine ändern. Der entsprechend umgekehrte Effekt ist auch bei einer Zylinderzuschaltung festzustellen. Um dies zu vermeiden wird vom momentanen Drosselklappensollwert WDK_ZAS0 bei deaktivierter Zylinderabschaltung auf einen korrigierten Drosselklappensollwert WDK-ZAS1 bei aktivierter Zylinderabschaltung umgeschaltet. Die Umschaltung kann durch Addition eines Umschaltkennfeldes, dessen Werte in Abhängigkeit von der Drehzahl n und dem unkorrigierten Drosselklappensollwert WDK-ZAS0 vorgeben werden, zum Drosselklappensollwert WDK_ZAS0 erfolgen.

Neben diesem Stationärwert für den Drehmomentausgleich vor beziehungsweise nach einem Umschaltvorgang kann zusätzlich noch eine dynamische Korrektur zur schnelleren Saugrohrdruckanpassung vorgenommen werden. Um bei einer spontanen Sollwertänderung den Saugrohrdruck schneller auf den neuen Sollwert einzustellen wird hierbei für eine kurze Zeitdauer eine überhöhte Sollwertänderung vorgegeben.

In Fig. 7 sind die Drosselklappensollwerte WDK_soll für einen stationären Zustand in Abhängigkeit von der Zeit vor, während und nach einer Zylinderabschaltung aufgetragen. Ausgehend von einem Zustand ZAS0 ohne Zylinderabschaltung wird die Drosselklappe auf einen Sollwert WDK_ZAS0 geregelt. Wird nun zu

einem Zeitpunkt $t_1$ die Zylinderabschaltung durch Unterschreiten der Kennlinie WDK1 gestartet, so wird für eine applizierbare Zeit T_DKOF2 zum Drosselklappensollwert WDK_ZAS0 ein Offset DKOF2 addiert. Nach Ablauf dieser Zeitspanne T_DKOF2 wird dann für die gesamte Dauer der Zylinderabschaltung auf den korrigierten Sollwert WDK_ZAS1 umgeschaltet. Wird anschließend die Zylinderabschaltung ab einem Zeitpunkt t2 durch Überschreiten der Kennlinie WDK2 wieder deaktiviert, so wird für eine applizierbare Zeit T_DKOF1 vom Drosselklappensollwert WDK_ZAS0 ein Offset DKOF2 subtrahiert. Nach Ablauf dieser Zeitspanne T_DKOF1 wird anschließend wieder auf den ursprünglichen Sollwert WDK_ZAS0 zurückgeschaltet. Die applizierbaren Zeiträume T_DKOF1, T_DKOF2 und die Offsetwerte für den Drosselklappensollwert WDK_soll können in Abhängigkeit von der Drehzahl n vorgegeben werden. Die Differenz zwischen den Sollwerten WDK_ZAS0 und WDK_Zas1 dient also zum stationären Momentenausgleich, während der Offset DKOF1 beziehungsweise DKOF2 eine schnellere Saugrohrentleerung beziehungsweise -befüllung bewirkt.

Zusätzlich zur Luftmengenkorrektur kann zur Verhinderung eines Drehmomentsprunges auch eine Zündwinkelkorrektur vorgenommen werden. Insbesondere bei der Zylinderzuschaltung kann das Motordrehmoment durch eine gezielte Verschlechterung des Zündwinkels über einen vorgegebenen Zeitraum reduziert werden. Die Zündwinkelkorrektur hat den Vorteil, daß sie im Vergleich zur Luftmengenkorrektur, bei der eine gewisse Totzeit zwischen einer Winkeländerung an der Drosselklappe und dem sich am Zylinder einstellenden Luftmassenstrom auftritt, einen schnelleren Einfluß auf das Motordrehmoment hat. Durch eine weitere Korrektur kann schließlich noch die Kraftstoffmenge beim Umschaltvorgang angepaßt werden, wobei die Wandfilmeffekte im abzuschaltenden Zylinder und dem zugehörigen Saugrohr berücksichtigt werden. Bei der Zylinderzuschaltung wird hierzu ein temperaturabhängiger Wandfilmzuschlag ermittelt und zur Einspritzmenge des ersten Einspritzvorganges addiert. Entsprechend kann der letzte Einspritzvorgang vor der Zylinderabschaltung korrigiert werden.

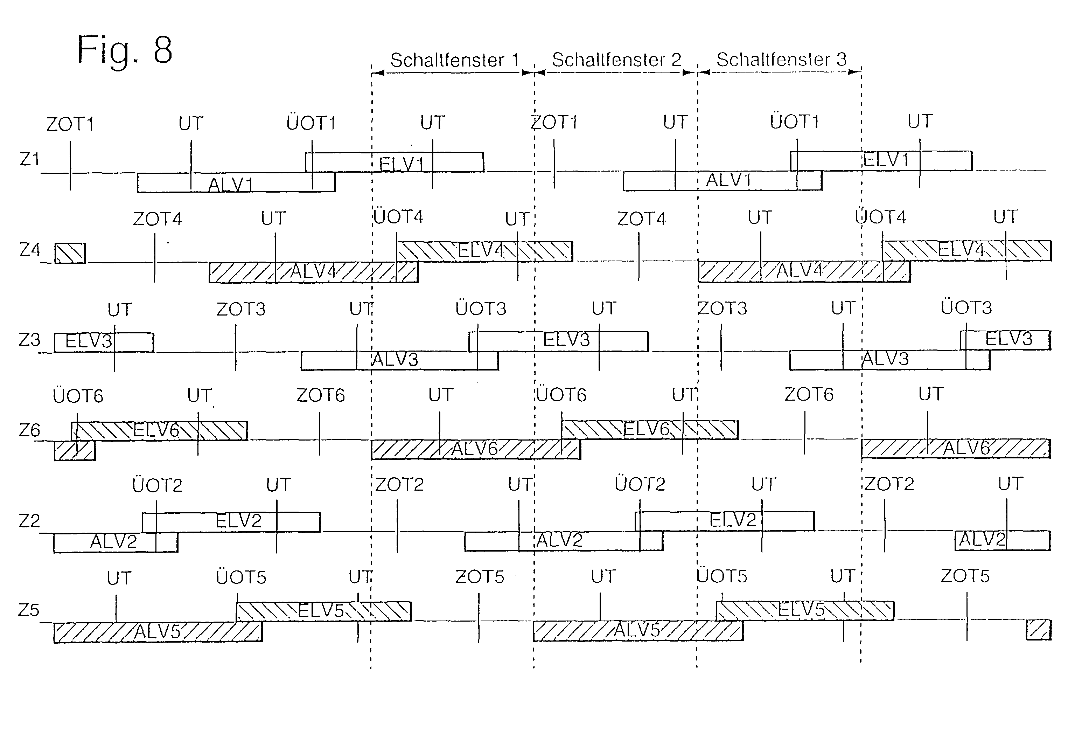

Ein weiteres Ausführungsbeispiel für ein erfindungsgemäßes Verfahren zur Zylinderabschaltung wird nun anhand von Fig. 8 näher beschrieben. Aufgetragen sind die Ventilsteuerzeiten eines Sechszylinder-Motors. Die Ventilsteuerzeiten der abzuschaltenden Zylinder Z4, Z6, Z5 sind schraffiert dargestellt. Bei diesem Ausführungsbeispiel sind alle Einlaßventile der zu schaltenden Zylinder Z4- Z6 mit einer ersten Abschalteinrichtung 27a und alle Auslaßventile mit einer zweiten Abschalteinrichtung 27b versehen. Mit dieser Konstellation ist es möglich, durch geeignete Wahl der Schaltfenster die Reihenfolge der schaltenden Zylinder festzulegen. Eingezeichnet in Fig. 8 sind die drei Schaltfenster1-3 für die Umschaltung der Auslaßventile. Erfolgt die Umschaltung in Schaltfenster1, so erfolgt die Zylinderabschaltung in der Reihenfolge Z5 - Z4 - Z6. Dies liegt daran, daß zu Beginn des Schaltfensters1 die Auslaßventile an den Zylindern Z4 und Z6 noch geöffnet sind beziehungsweise schon öffnen und daher aufgrund des Kraftschlußes am Bolzen 13 nicht aus der Koppelstellung gelangen können. Daher ist das Auslaßventil ALV5 das erste Auslaßventil, daß aus dem Koppelzustand gelangen kann. In den beiden anderen Schaltfenstern2-3 ist die Reihenfolge der Zylinder zyklisch vertauscht, wobei die Auslaßventile bei einem Schaltvorgang im Schaltfenster2 in der Reihenfolge ALV4 - ALV6-ALV5 und im Schaltfenster3 in der Reihenfolge ALV6 - ALV5 - ALV4 deaktiviert werden. Der Schaltvorgang erfolgt analog zum ersten Ausführungsbeispiel wiederum in der Mitte des jeweiligen Schaltfensters. Auch das Timing für die Ansteuerung des 3/2-Wegeventils 20 entspricht dem oben beschriebenen.

Für die Einlaßventile können entsprechende Schaltfenster ermittelt werden, wobei diese jedoch aus Gründen der Übersichtlichkeit in Fig. 8 nicht eingetragen sind. Die Lage der Schaltfenster bezogen auf den Überschneidungs-OT des ersten schaltenden Zylinders wird ermittelt nach den Formeln:

$$\text{Schaltfenster-Mitte Einlaß} = -EB - 120° \text{ KW}$$

$$\text{Schaltfenster-Mitte Auslaß} = -AB - 300° \text{ KW}$$

mit:

EB = Einlaßbeginn (Betrag) in °KW vor OT bei 0mm Ventilhub,

AB = Auslaßbeginn (Betrag) in °KW vor UT bei 0mm Ventilhub,

wobei in der Formel ein positives Vorzeichen einem Kurbelwinkel nach und ein negatives Vorzeichen einem Kurbelwinkel vor dem Überschneidungs-OT entspricht.

## Patentansprüche

1. Verfahren zum Ab- und Zuschalten von einzelnen Zylindern einer Mehrzylinderbrennkraftmaschine mit zumindest einem Einlaßund mindestens einem Auslaßventil pro Zylinder und mit einer Vorrichtung zur zylinderindividuellen Kraftstoffeinspritzung, wobei beim Ab- beziehungsweise Zuschalten eines ausgewählten Zylinders die Gaswechselventile des besagten Zylinders mit Hilfe einer Abschalteinrichtung deaktiviert beziehungsweise aktiviert werden und die Kraftstoffeinspritzung in besagten Zylinder in Abhängigkeit des Betriebszustandes der Gaswechselventile deaktiviert beziehungsweise aktiviert werden, wobei beim Umschalten des besagten Zylinders die Aktivierung beziehungsweise Deaktivierung der Ein- und Auslaßventile derart zeitlich gesteuert erfolgt, daß die Abschaltung des besagten Zylinders nach einem Ansaugtakt und die Zuschaltung des besagten Zylinders vor einem Auslaßtakt erfolgt, **dadurch gekennzeichnet,** daß die Ein- und Auslaßventile (2) zumindest eines Zylinders (Zi) der Mehrzylinderbrennkraftmaschine, die jeweils eine nur außerhalb der Ventilerhebungskurven schaltbare Koppelvorrichtung (25) aufweisen, durch eine gemeinsame Abschalteinrichtung (27) betätigt werden, und daß die Abschalteinrichtung (27) bei Vorliegen eines Umschaltsignals zu einem Zeitpunkt(SZP1, SZP2) aktiviert wird, an dem in Bezug auf den ersten zu schaltenden Zylinder (Zi) alle zu schaltenden Einlaßventile (2) den jeweiligen Einlaßtakt (ELVi) des vorherigen Arbeitstaktes zumindest begonnen haben und der gewährleistet, daß der Koppelvorgang am Auslaßventil (2) des ersten zu schaltenden Zylinders (Zi) vor Beginn des Auslaßtaktes (ALVi) dieses Zylinders (Zi) abgeschlossen ist.

2. Verfahren nach Anspruch 1,
   **dadurch gekennzeichnet,**

   - daß für die Abschalteinrichtung (27) ein Kurbelwellenwinkel (WSFM1, WSFM2) relativ zu einer Referenzmarke an der Kurbelbeziehungsweise Nockenwelle, an dem der Umschaltvorgang starten soll, vorgegeben wird,
   - daß eine Schaltzeit (AbsZ1, AbsZ2) der Abschalteinrichtung (27) in Abhängigkeit von Betriebsparametern ermittelt wird,
   - daß beim Vorliegen eines Umschaltsignals die Schaltzeit (AbsZ1, AbsZ2) und der Kurbelwellenwinkel (WSFM1, WSFM2) zum aktuellen Kurbelwellenwinkel addiert werden,
   - daß ausgehend von diesem Kurbelwellenwinkel der nächstfolgende Referenzmarke ermittelt und daraus durch Subtraktion des Kurbelwellenwinkels (WSFM1, WSFM2) und der Schaltzeit (AbsZ1, AbsZ2) der Schaltzeitpunkt (SZP1, SZP2) für die Abschalteinrichtung (27) berechnet wird, und
   - daß bei Erreichen des Schaltzeitpunktes (SZP1, SZP2) die Umschalteinrichtung (27) aktiviert wird.

3. Verfahren nach Anspruch 1,
   **dadurch gekennzeichnet,**
   daß die Ein- und Auslaßventile (2) mehrere Zylinder (Zi) der Mehrzylinderbrennkraftmaschine, die jeweils eine nur außerhalb der Ventilerhebungskurven schaltbare Koppelvorrichtung (25) aufweisen, durch jeweils eine gemeinsame Abschalteinrichtung (27) betätigt werden, und daß die Abschalteinrichtungen (27) bei Vorliegen eines Umschaltsignals zu einem Zeitpunkt(SZP1, SZP2) aktiviert werden, an dem in Bezug auf den ersten zu schaltenden Zylinder (Zi) alle zu schaltenden Einlaß- beziehungsweise Auslaßventile (2) den jeweiligen Einlaß- beziehungsweise Auslaßtakt (ELVi, ALVi) des vorherigen Arbeitstaktes zumindest begonnen haben und der gewährleistet, daß der Koppelvorgang am Einlaß- beziehungsweise Auslaßventil (2) des ersten zu schaltenden Zylinders (Z) vor Beginn des Einlaß- beziehungsweise Auslaßtaktes (ALVi) dieses Zylinders (Zi) abgeschlossen ist.

4. Verfahren nach Anspruch 1,
   **dadurch gekennzeichnet,**
   daß die Kraftstoffeinspritzung des besagten Zylinders (Zi) in Abhängigkeit vom Zustand der Zylinderabschaltung (ZAS0, ZAS1) derart deaktiviert beziehungsweise aktiviert wird, daß exakt zu jedem Ansaugvorgang des zumindest einen Einlaßventils (ELVi) eine zugehörige Kraftstoffeinspritzung erfolgt.

## Claims

1. A method of disconnecting and reconnecting individual cylinders of a multi-cylinder internal combustion engine with at least one intake and at least one exhaust valve per cylinder and having a device for injecting fuel into individual cylinders, in which, when disconnecting or reconnecting a selected cylinder, the gas shuttle valves of the said cylinder are deactivated or activated by means of a shutoff device and the fuel injection to said cylinder is deactivated or activated depending on the operating state of the gas shuttle valves, whereby, when switching said cylinder, activation or deactivation control of the intake and exhaust valves is timed so that said cylinder is shut off after an induction cycle and said cylinder is connected before an exhaust cycle,
   **characterised in that**
   the intake and exhaust valves (2) of at least one cylinder (Zi) of the multi-cylinder internal combustion engine, each having a coupling device (25) which can not be switched other than outside of the valve lift curves, are operated by a common shutoff device (27) and in that the shutoff device (27)is activated if a switching signal is present at an instant (SZP1, SZP2) at which all the intake valves (2) to be switched relating to the first cylinder to be switched (Zi) have at least started the respective induction cycle (ELVi) of the preceding working cycle and which guarantees that the coupling operation at the exhaust valve (2) of the first cylinder to be switched (Zi) has terminated before the start of the exhaust cycle (ALVi) of this cylinder (Zi).

2. A method as claimed in claim 1,

**characterised in that**

- a crankshaft angle (WSFM1, WSFM2) relative to a reference marker on the crank or cam shaft at which the switching operation is to start is predetermined for the shutoff device (27),
- a switching time (AbsZ1, AbsZ2) of the shutoff device (27) is determined depending on operating parameters,
- if a switching signal is present, the switching time (AbsZ1, AbsZ2) and the crankshaft angle (WSFM1, WSFM2) are added to the current crankshaft angle,
- the next subsequent reference marker is determined on the basis of this crankshaft angle and the switching time (SZP1, SZP2) for the shutoff device (27) is computed therefrom by subtracting the crankshaft angle (WSFM1, WSFM2) and the switching time (AbsZ1, AbsZ2) and
- when the switching time (SZP1, SZP2) is reached, the switching device (27) is activated.

3. A method as claimed in claim 1,
   **characterised in that**
   the intake and exhaust valves (2) of several cylinders (Zi) of the multi-cylinder internal combustion engine, each having a coupling device (25) which can not be switched other than outside the valve lift curves, are respectively operated by a common shutoff device (27) and in that if a switching signal is present the shutoff devices (27) are activated at a time (SZP1, SZP2) at which all the intake and exhaust valves (2) to be switched relating to the first cylinder to be switched (Zi) have at least started the respective induction or exhaust cycle (ELVi, ALVi) of the preceding working cycle and which guarantees that the coupling operation at the intake or exhaust valve (2) of the first cylinder (Zi) to be switched has ended before the start of the induction or exhaust cycle (ALVi) of this cylinder (Zi).

4. A method as claimed in claim 1,
   **characterised in that**
   the fuel injection of said cylinder (Zi) is deactivated or activated in such a way, depending on the state of the cylinder shutoff (ZAS0, ZAS1), that an associated fuel injection occurs at exactly every induction operation of the at least one intake valve (ELVi).

## Revendications

1. Procédé de mise hors service et de mise en service de cylindres individuels d'un moteur à combustion interne à plusieurs cylindres, comportant au moins une soupape d'admission et au moins une soupape d'échapement par cylindre, et avec un dispsotif pout assurer l'injection de carburant, individuellement à chaque cylindre, où, lors de la mise hors service, respectivement la mise en service, d'un cylindre sélectionné, les soupapes de changement -de gaz dudit cylindre sont désactivées, respectivement activées, à l'aide d'un dispositif de mise hors service, et l'injection de carburant dans ledit cylindre est désactivée, respectivement activée en fonction de l'état de fonctionnement des soupapes de changement de gaz, où, lors de la commutation dudit cylindre, l'activation, respectivement la désactivation des soupapes d'admission et d'échappement s'effectuent sous une commande temporelle, de manière que la mise hors service dudit cylindre s'effectue après un cycle d'aspiration et que la mise en service dudit cylindre s'effectue avant un cycle d'échappement,
caractérisé en ce que
les soupapes d'admission et d'échappement (2) d'au moins un cylindre (Zi) du moteur à combustion interne à plusieurs cylindres, qui présentent chacune un dispositif de couplage (25) susceptible d'être commuté uniquement hors des courbes de levée de soupape, sont actionnées par un dispositif de mise hors service (27) commun, et en ce que le dispositif de mise hors service (27) est activé en cas de présence d'un signal de commutation, à un moment (SZP1, SZP2) auquel, en référence au premier cylindre (Zi) à commuter, toutes les soupapes d'admission (2) en commutation ont au moins commencé le cycle d'admission (ELVi) respectif du cycle de travail précédent, et qui assure que le processus de couplage sur la soupape d'échappement (2) du premier cylindre (Zi) à commuter est achevé avant le début du cycle d'échappement (ALVi) de ce cylindre (Zi).

2. Procédé selon la revendication 1,
   caractérisé en ce qu'

   - un angle de vilebrequin (WSFM1, WSLM2) par rapport à une marque de référence placée sur le vilebrequin, respectivement sur l'arbre à came, auquel le processus de commutation doit commencer, est prédéterminé pour le dispositif de mise hors service (27),
   - en ce qu'un temps de commutation (AbsZ1, AbsZ2) du dispositif de mise hors service (27) est déterminé, en fonction de paramètres de fonctionnement,
   - en ce que, en cas de présence d'un signal de commutation, le temps de commutation (AbsZ1, AbsZ2) et l'angle de vilebrequin (WSFM1, WSFM2) sont ajoutés pour donner l'angle actuel du vilebrequin,
   - en ce que, en partant de cet angle de vilebrequin, la marque de référence immédiatement suivante est déterminée et, à partir de cela, on calcule le moment de commutation (SZP1, SZP2) pour le dispositif de mise hors service (27) par soustraction de l'angle de vilebrequin (WSFM1, WSFM2) et du temps de commutation (AbsZ1, AbsZ2), et

- en ce que le dispositif de commutation (27) est activé, lors de l'atteinte du moment de commutation (SZP1, SZP2).

3. Procédé selon la revendication 1, caractérisé en ce que les soupapes d'admission et d'échappement (2) de plusieurs cylindres (Zi) du moteur à combustion interne à plusieurs cylindres, qui présentent chacune un dispositif de couplage (25) pouvant être commuté uniquement hors des courbes de levée de soupape, sont actionnées respectivement par un dispositif de mise hors service (27) commun, et en ce que les dispositifs de mise hors service (27) sont activés, en cas de présence d'un signal de commutation, à un moment (SZP1, SZP2) auquel, en référence au premier cylindre (Zi) à commuter, toutes les soupapes d'admission, respectivement d'échappement (2) à commuter ont au moins commencé le cycle d'admission, respectivement d'échappement (ELVi, ALVi) spécifique du cycle de travail précédent, et qui assure que le processus de couplage opéré sur la soupape d'admission, respectivement la soupape d'échappement (2) du premier cylindre (Z) à commuter, est achevé avant le début du cycle d'admission, respectivement du cycle de travail (ALVi), de ce cylindre (Zi).

4. Procédé selon la revendication 1, caractérisé en ce que l'injection de carburant dudit cylindre (Zi) est activée, respectivement désactivée, en fonction de l'état de la mise hors service de cylindres (ZAS0, ZAS1), de manière qu'une injection de carburant afférente s'effectue exactement à chaque processus d'aspiration de la au moins une soupape d'admission (ELVi).

Fig. 1

Fig. 2

EP 0 779 427 B1

# Fig.3

13

# Fig. 4

a)

ALV2 ELV2    ALV2 ELV2              ALV2 ELV2    ALV2 ELV2

kW

ZAS0              ZAS1              ZAS0

b)

ALV2 ELV2    ALV2 ELV2              ALV2 ELV2    ALV2 ELV2

kW

ZAS0              ZAS1              ZAS0

c)

ALV2 ELV2    ALV2 ELV2              ALV2 ELV2    ALV2 ELV2

kW

ZAS0              ZAS1              ZAS0

EP 0 779 427 B1

Fig. 5

## Fig. 6

## Fig. 7

Fig. 8

EP 0 779 427 B1